# EUROPEAN PATENT APPLICATION

(11) **EP 4 749 667 A1**
(43) Date of publication of application: **27.05.2026**
(21) Application number: 25217965.0
(22) Date of filing: 24.11.2025
(51) Int. Cl.: H01F 3/10, H01F 27/28, H01F 27/38, H01F 27/40, H01F 3/14

(54) **INTEGRATED MAGNETIC COMPONENT**

(30) Priority: 26.11.2024 US 202463725041 P
(71) Applicant: DELTA ELECTRONICS, INC., 11491 Taipei (TW)
(72) Inventor: Wang, Dakai, Morrisville, NC 27560 (US); Jin, Feng, Morrisville, NC 27560 (US); Chang, Yi-Sheng, Taoyuan City 320023 (TW); Tsai, Meng-Chi, Taoyuan City 320023 (TW); Kumar, Misha, Morrisville, NC 27560 (US); Barbosa, Peter Mantovanelli, Taoyuan City 320023 (TW)
(74) Representative: Uexküll & Stolberg

(57) **Abstract**

An integrated magnetic component (1, 1a, 1b, 1c, 1d, 1e, 1f) is disclosed and includes a plurality of PCBs (4, 4a, 4b), a transformer (T) and a plurality of inductors (3, 3a, 3b, 3c, 3d, 3e, 3f). The transformer (T) includes a plurality of primary windings (21), a plurality of secondary windings (22), and two pieces of transformer cores (23). The primary windings (21) and the secondary windings (22) are disposed on the PCBs (4, 4a, 4b) and wound around the two pieces of transformer cores (23). The inductors (3, 3a, 3b, 3c, 3d, 3e, 3f) are disposed on the PCBs (4, 4a, 4b) and connected to the transformer (T). The primary windings (21) and the secondary windings (22) of the transformer (T) are disposed correspondingly in pairs on one of the PCBs (4, 4a, 4b), and the inductors (3, 3a, 3b, 3c, 3d, 3e, 3f) are disposed adjacent to the transformer (T).

## Description

### FIELD OF THE DISCLOSURE

This disclosure relates to a magnetic component, and more particularly to an integrated magnetic component for isolated DC-DC converter.

### BACKGROUND OF THE DISCLOSURE

Planar transformers with PCB windings have drawn significant attention due to their easy manufacturability, low cost, and large cooling surface area. However, engineers have raised concerns about their lower efficiency and poorer thermal performance compared to traditional transformers using Litz wire. The reasons that caused the problems include: (1) high DC resistance because the copper volume is much less than Litz wire based transformer and the current density is much higher; (2) high AC resistance to create large leakage inductance.

To reduce DC resistance, the copper thickness and number of layers need to be increased. However, the copper thickness of PCB winding is limited due to skin effect, a greater number of layers would require buried and blind vias, and the cost increases a lot in both cases. Therefore, use multiple PCB windings in parallel or in series can help reduce DC resistance.

To reduce AC resistance, good interleaving between primary and secondary windings is preferred.

Another reason for low efficiency is that planar transformer is based on 2-dimensional optimization. It sacrifices the z-direction optimization compared to traditional transformer.

In a conventional transformer with multiple PCB winding boards, the current sharing is a problem because of different leakage inductance and ESR due to asymmetric structure and fringing effect. Besides, the integration of resonant inductor is also a problem because PCB based inductors is very lossy if the number of turns is too high.

Therefore, there is a need of providing an integrated magnetic component for isolated DC-DC converter to obviate the drawbacks encountered from the prior arts.

### SUMMARY OF THE DISCLOSURE

An object of the present disclosure is to provide an integrated magnetic component for an isolated DC-DC converter. The integrated magnetic component is a PCB-winding-based integrated magnetic component with two pieces of transformer cores and multiple pieces of inductor cores. The inductor cores can be any shape including matrix core types. The PCB windings on the primary and the secondary sides can be connected in series or in parallel to handle high voltage/current application. Each PCB can be changed to multiple PCBs connected in parallel or in series. Comparing to Litz wire, the multiple-layers PCB windings are low cost and helpful to form the high efficiency integrated magnetic component. Since the transformer winding is formed by many paralleled PCBs, it facilitates the integrated magnetic component to have a low DC resistance. Furthermore, the primary winding and the secondary winding are in good interleaving, so that the integrated magnetic component has a low Fr (R_{ac}/R_{dc}). The two pieces of transformer cores are selected from PQ core, EE core, EQ core or EI core. The inductor winding has small number of turns (≤4), and it helps to achieve the low Fr. The plural pieces of inductor cores form a single-phase vertical matrix inductor core structure with lower core loss and volume saving, so that the current sharing is controlled by the tolerance of vertical matrix inductors.

In accordance with an aspect of the present disclosure, an integrated magnetic component for an isolated DC-DC converter is provided and includes a plurality of PCBs, a transformer and a plurality of inductors. The transformer includes a plurality of primary windings, a plurality of secondary windings, and two pieces of transformer cores. The primary windings and the secondary windings are disposed on the PCBs and wound around the two pieces of transformer cores. The inductors are disposed on the PCBs and connected to the transformer. The primary windings and the secondary windings of the transformer are disposed correspondingly in pairs on one of the PCBs, and the inductors are disposed adjacent to the transformer.

In an embodiment, the inductors are disposed on one side of the transformer, wherein the inductors include one piece of inductor core cover, (N-1) pieces of first inductor core base and one piece of second inductor core base, wherein N is an integer equal to or greater than 2.

In an embodiment, the isolated DC-DC converter is a Series Resonant Converter (SRC), an LLC resonant converter, a CLL resonant converter or a Dual Active Bridge (DAB) converter.

In an embodiment, the inductors are disposed on both sides of the transformer, wherein the inductors includes one piece of first inductor core cover, one piece of second inductor core cover, (N-1) pieces of first inductor core base, one piece of second inductor core base, (N-1) pieces of third inductor core base, and one piece of fourth inductor core base, wherein N is an integer equal to or greater than 2.

In an embodiment, the isolated DC-DC converter is a CLLC resonant converter or a CLLLC resonant converter or a Dual Active Bridge (DAB) converter.

In an embodiment, the inductors are connected to the primary windings and the secondary windings of the transformer in series or parallel.

In an embodiment, the inductors include 2N inductors and a cell with an inductor airgap between each adjacent two of 2N inductors, wherein N is an integer equal to or greater than 2. The inductor airgap has a gap distance, and a spaced distance is between the transformer and the inductors.

In an embodiment, the inductors are positively coupled with each other.

In accordance with another aspect of the present disclosure, an integrated magnetic component for an isolated DC-DC converter is provided and includes a plurality of PCBs, a transformer and a plurality of inductors. The transformer includes a plurality of primary windings, a plurality of secondary windings, and two pieces of transformer cores. The primary windings and the secondary windings are disposed on the PCBs and wound around the two pieces of transformer cores. The inductors are disposed on the PCBs and include one inductor core or a plurality of inductor cores. The primary windings and the secondary windings of the transformer are disposed on different PCBs, and the inductors are disposed on both sides of the transformer.

In an embodiment, the inductors include 2N inductors and a cell with an inductor airgap between each adjacent two of 2N inductors, wherein N is an integer equal to or greater than 2. The inductor airgap has a gap distance, and a spaced distance is between the transformer and the inductors.

In an embodiment, the isolated DC-DC converter is a CLL resonant converter or a LLCL resonant converter.

In an embodiment, the two pieces of transformer cores without airgap on the side legs thereof and the inductor core without airgap on the side legs thereof are integrated with each other.

In an embodiment, the inductors are positively coupled to each other.

In accordance with a further aspect of the present disclosure, an integrated magnetic component for an isolated DC-DC converter is provided and includes a plurality of PCBs, a transformer and a plurality of inductors. The transformer includes a plurality of primary windings, a plurality of secondary windings, and a transformer core. The primary windings and the secondary windings are disposed on the PCBs and wound around the transformer core. The inductors include an inductor core. The inductors are disposed on the PCBs and positively coupled with each other.

In an embodiment, the primary windings and the secondary windings of the transformer are disposed correspondingly in pairs on one of the PCBs, and the inductors are disposed on both sides of the transformer.

In an embodiment, the primary windings and the secondary windings of the transformer are disposed on the different PCBs, and the inductors are disposed on one side or both sides of the transformer.

In an embodiment, the inductors include 2N inductors and a cell with an inductor airgap between each adjacent two of 2N inductors, wherein N is an integer equal to or greater than 2. The inductor airgap has a gap distance, and a spaced distance is between the transformer and the inductors.

In an embodiment, the isolated DC-DC converter is a CLL resonant converter or a LLCL resonant converter.

In an embodiment, the primary windings are connected in series or parallel, the secondary windings are connected in series or parallel, and the inductors are respectively connected to the primary windings and the secondary windings.

In an embodiment, the inductors are positively coupled with each other.

The beneficial effect of the present disclosure is that the embodiments of the present disclosure provide an integrated magnetic component integrated with a plurality of positively coupled inductors. PCB windings on the primary and the secondary sides are connected in series or in parallel to handle high voltage/current application, it facilitates the integrated magnetic component to have a low DC resistance and a low Fr (R_{ac}/R_{dc}). Furthermore, the plural pieces of inductor cores form a single-phase vertical matrix inductor core structure with lower core loss and volume saving, so that the current sharing is controlled by the tolerance of vertical matrix inductors.

### BRIEF DESCRIPTION OF THE DRAWINGS

The above contents of the present disclosure will become more readily apparent to those ordinarily skilled in the art after reviewing the following detailed description and accompanying drawings, in which:
FIG. 1 is a schematic perspective view illustrating an integrated magnetic component according to a first embodiment of the present disclosure;
FIG. 2A and FIG. 2B show two exemplary circuits with primary windings in series and secondary windings in parallel that can use the proposed integrated magnetic component of FIG. 1;
FIG. 3A and FIG. 3B show two exemplary circuits with primary windings in series and secondary windings in parallel that can use the proposed integrated magnetic component of FIG. 1;
FIG. 4A and FIG. 4B show two exemplary circuits with both primary windings and secondary windings in series that can use the proposed integrated magnetic component of FIG. 1;
FIG. 5 is a schematic perspective view illustrating an integrated magnetic component according to a second embodiment of the present disclosure;
FIG. 6A and FIG. 6B show two exemplary circuits that can use the proposed integrated magnetic component of FIG. 5;
FIG. 7A and FIG. 7B show two exemplary circuits that can use the proposed integrated magnetic component of FIG. 5;
FIG. 8A and FIG. 8B show two exemplary circuits that can use the proposed integrated magnetic component of FIG. 5;
FIG. 9 is a schematic perspective view illustrating an integrated magnetic component according to a third embodiment of the present disclosure;
FIG. 10 is a schematic perspective view illustrating the integrated magnetic component according to a fourth embodiment of the present disclosure;
FIG. 11A and FIG. 11B show two exemplary circuits with primary windings in series and secondary windings in parallel that can use the proposed integrated magnetic component of FIG. 10;
FIG. 12A and FIG. 12B show exemplary structures of positively coupled inductors according to the fourth embodiment of the present disclosure;
FIG. 13A to FIG. 13C show exemplary structures of transformer according to a fifth embodiment of the present disclosure;
FIG. 14 is a lateral view illustrating the integrated magnetic component according to a variation example of the first embodiment of FIG. 1;
FIG. 15 is a schematic perspective view illustrating the integrated magnetic component according to another variation example of the first embodiment of FIG. 1; and
FIG. 16 is a lateral view illustrating the integrated magnetic component according to a variation example of the third embodiment of FIG. 9.

### DETAILED DESCRIPTION

The present disclosure will now be described more specifically with reference to the following embodiments. It is to be noted that the following descriptions of embodiments of this disclosure are presented herein for purpose of illustration and description only. It is not intended to be exhaustive or to be limited to the precise form disclosed. For example, the formation of a first feature over or on a second feature in the description that follows may include embodiments in which the first and second features are formed in direct contact, and may also include embodiments in which additional features may be formed between the first and second features, such that the first and second features may not be in direct contact. In addition, the present disclosure may repeat reference numerals or letters in the various examples. This repetition is for the purpose of simplicity and clarity and does not in itself dictate a relationship between the various embodiments or configurations discussed. Further, spatially relative terms, such as "upper," "lower," "top," "bottom" and the like, may be used herein for ease of description to describe one element or feature's relationship to another element(s) or feature(s) as illustrated in the figures. The spatially relative terms are intended to encompass different orientations of the device in use or operation in addition to the orientation depicted in the figures. The apparatus may be otherwise oriented (rotated 90 degrees or at other orientations) and the spatially relative descriptors used herein may likewise be interpreted accordingly. When an element is referred to as being "connected," or "coupled," to another element, it can be directly connected or coupled to the other element or intervening elements may be present. Although the wide numerical ranges and parameters of the present disclosure are approximations, numerical values are set forth in the specific examples as precisely as possible. In addition, although the "first," "second," "third," and the like terms in the claims be used to describe the various elements can be appreciated, these elements should not be limited by these terms, and these elements are described in the respective embodiments are used to express the different reference numerals, these terms are only used to distinguish one element from another element. For example, a first element could be termed a second element, and, similarly, a second element could be termed a first element, without departing from the scope of example embodiments. Besides, "and / or" and the like may be used herein for including any or all combinations of one or more of the associated listed items.

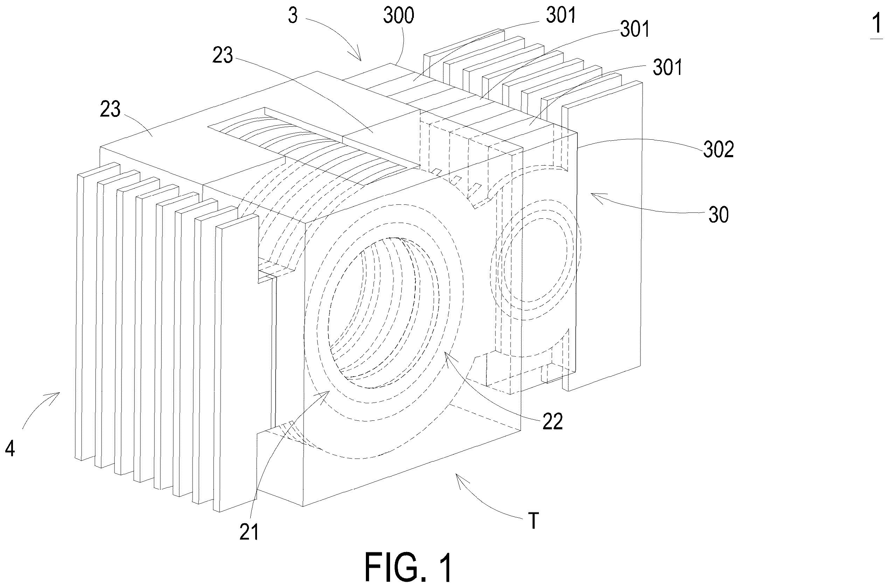

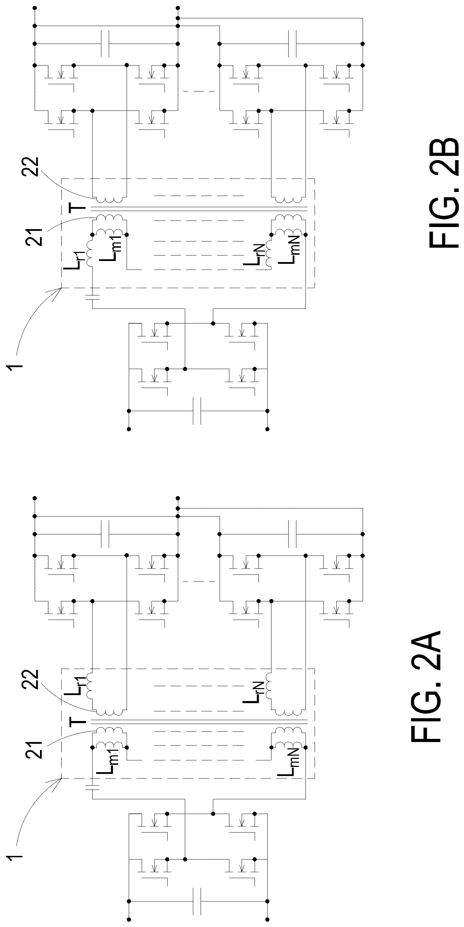

FIG. 1 is a schematic perspective view illustrating the integrated magnetic component according to a first embodiment of the present disclosure. FIG. 2A to FIG. 4B show several exemplary circuits that can use the proposed integrated magnetic component of FIG. 1. Preferably but not exclusively, the integrated magnetic component 1 is applicable to an isolated DC-DC converter, such as a Series Resonant Converter (SRC), an LLC resonant converter, a CLL resonant converter or a Dual Active Bridge (DAB) converter. Refer to FIG. 1 and FIG. 2A. The integrated magnetic component 1 includes a transformer T, a plurality of inductors 3 and a plurality of PCBs 4. In the embodiment, the transformer T includes a plurality of primary windings 21, a plurality of secondary windings 22 and two pieces of transformer cores 23. The primary windings 21 and the secondary windings 22 of the transformer T are disposed correspondingly in pairs on one of the PCBs 4. The inductors 3 are disposed on one side of transformer T. The transformer T includes two pieces of transformer cores 23 with or without airgap therebetween. Preferably but not exclusively, the transformer cores 23 are one selected from the group consisting of an EE core, EQ core, an EI core, a PQ core and a matrix core.

In the embodiment, the inductors 3 are disposed on the PCBs 4 and include one piece of inductor core cover 300, (N-1) pieces of first inductor core base 301 and one piece of second inductor core base 302. Preferably but not exclusively, the first inductor core base 301 and the second inductor core base 302 have the same or different profile design. In the embodiment, N=8. In other embodiments, the N is an integer equal to or greater than 2. Especially the plate thickness of the first inductor core base 301 and the plate thickness of the second inductor core base 302 are the same or different. The inductor cores 30 can be any shape. Notably, the plural pieces of inductor cores 30 form a single-phase vertical matrix inductor core structure with lower core loss and volume saving, so that the current sharing can be controlled by the tolerance of vertical matrix inductors. Furthermore, the inductor windings (not shown) are formed on the PCBs 4, and has small turns (<4), as so to achieve the low Fr (R_{ac}/R_{dc}).

In the embodiment, the primary windings 21 and the secondary windings 22 are wound around the transformer cores 23, the primary windings 21 are connected in series or in parallel, and the secondary windings 22 are connected in series or in parallel. The corresponding circuits that can use the proposed integrated magnetic component of FIG. 1 are shown in FIGS. 2A to 4B, but the present disclosure is not limited to these circuits. The inductors 3 include inductors Lᵣ₁~L_{rN}. The transformer T includes a plurality of magnetizing inductors Lₘ₁~L_{mN}. In an embodiment, the primary windings 21 are connected in series, the secondary windings 22 are connected in parallel, and the inductors Lᵣ₁~L_{rN} are respectively connected with the secondary windings 22 in series, as shown in FIG. 2A. In an embodiment, the primary windings 21 are connected in series, the secondary windings 22 are connected in parallel, the inductors Lₘ₁~L_{mN} are respectively connected with the primary windings 21 in parallel and the inductors Lᵣ₁~L_{rN} are respectively connected with the primary windings 21 in series, as shown in FIG. 2B.

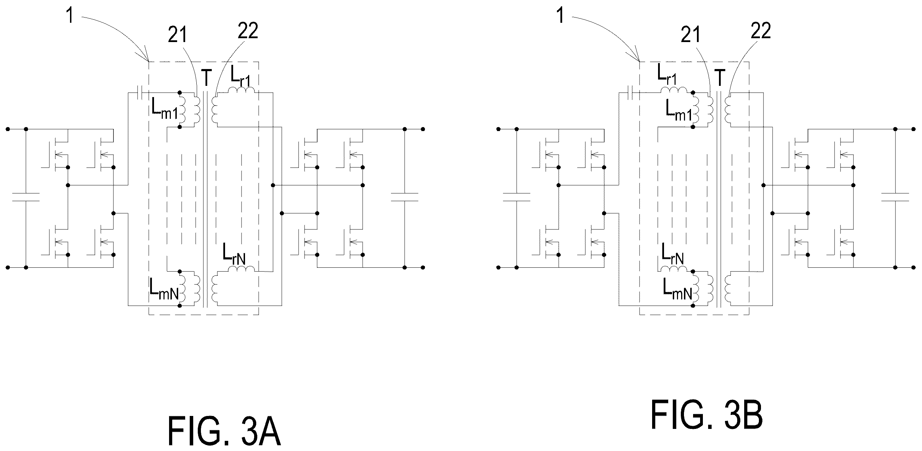

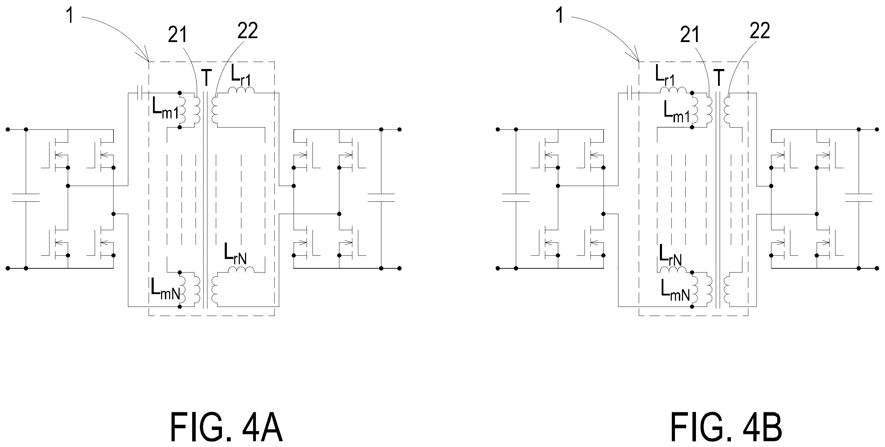

In an embodiment, the primary windings 21 are connected in series, the secondary windings 22 are connected in parallel, the inductors Lₘ₁~L_{mN} are the magnetizing inductors of the transformer T, and the inductors Lᵣ₁~L_{rN} are respectively connected with the secondary windings 22 in series, as shown in FIG. 3A. In an embodiment, the primary windings 21 are connected in series, the secondary windings 22 are connected in parallel, the inductors L_{m1~}L_{mN} are the magnetizing inductors of the transformer T, and the inductors Lᵣ₁~L_{rN} are respectively connected with the primary windings 21 in series, as shown in FIG. 3B. In an embodiment, the primary windings 21 are connected in series, the secondary windings 22 are connected in series, the inductors L_{m1~}L_{mN} are the magnetizing inductors of the transformer T, and the inductors Lᵣ₁~L_{rN} are respectively connected with the secondary windings 22 in series, as shown in FIG. 4A. In an embodiment, the primary windings 21 are connected in series, the secondary windings 22 are connected in series, the inductors L_{m1~}L_{mN} are respectively connected with the primary windings 21 in parallel and the inductors Lᵣ₁~L_{rN} are respectively connected with the primary windings 21 in series, as shown in FIG. 4B. The primary windings 21 and the secondary windings 22 are in good interleaving, so that the integrated magnetic component 1 has a low Fr (R_{ac}/R_{dc}).

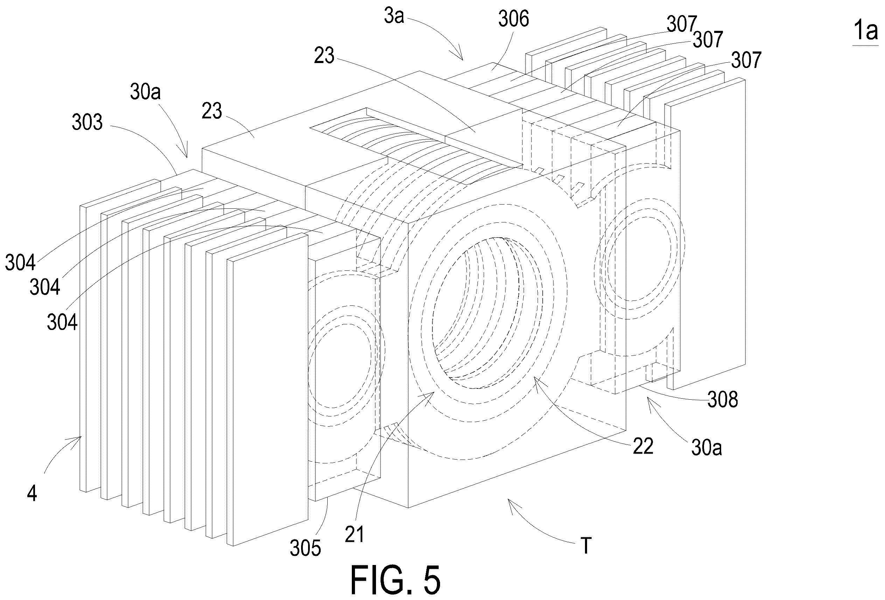

FIG. 5 is a schematic perspective view illustrating the integrated magnetic component according to a second embodiment of the present disclosure. In the embodiment, the structures, elements and functions of the integrated magnetic component 1a are similar to those of the integrated magnetic component 1 of FIG. 1, and are not redundantly described herein. In the embodiment, the integrated magnetic component 1a is applicable to an isolated DC-DC converter, such as a CLLC resonant converter, a CLLLC resonant converter or a Dual Active Bridge (DAB) converter. The integrated magnetic component 1a includes a transformer T, a plurality of inductors 3a and a plurality of PCBs 4. The primary windings 21 and the secondary windings 22 of the transformer T are disposed correspondingly in pairs on one of the PCBs 4. The inductors 3a are disposed on both sides of transformer T. The transformer T includes two pieces of transformer cores 23 with or without airgap therebetween. Preferably but not exclusively, the transformer cores 23 are one selected from the group consisting of an EE core, an EI core, EQ core, a PQ core and a matrix core.

In the embodiment, the inductors 3a include one piece of first inductor core cover 303, one piece of second inductor core cover 306, (N-1) pieces of first inductor core bases 304, one piece of second inductor core base 305, (N-1) pieces of third inductor core bases 307, and one piece of fourth inductor core base 308. In the embodiment, N=8. In other embodiments, the N is an integer equal to or greater than 2. Preferably but not exclusively, the first inductor core base 304, the second inductor core base 305, the third inductor core base 307 and the fourth inductor core base 308 have the same or different profile design. Especially, the plate thickness of the first inductor core base 304, the plate thickness of the second inductor core base 305, the plate thickness of the third inductor core base 307 and the plate thickness of the fourth inductor core base 308 are the same or different. The inductor core 30a can be any shape. Notably, the plural pieces of inductor cores 30a form a single-phase vertical matrix inductor core structure with lower core loss and volume saving, so that the current sharing can be controlled by the tolerance of vertical matrix inductors. Furthermore, the inductor windings (not shown) are formed on the PCBs 4, and has small turns (<4), as so to achieve the low Fr (R_{ac}/R_{dc}).

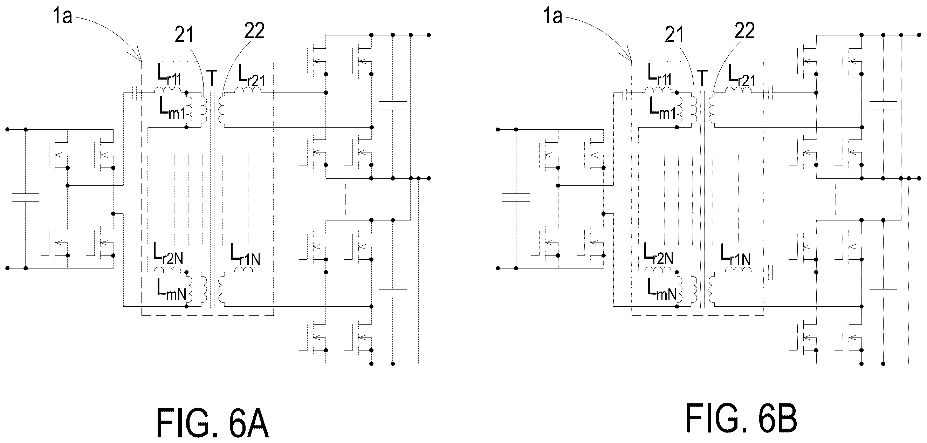

In the embodiment, the primary windings 21 and the secondary windings 22 are wound around the transformer cores 23, the primary windings 21 are connected in series or in parallel, and the secondary windings 22 are connected in series or in parallel. The corresponding circuits that can use the proposed integrated magnetic component of FIG. 5 are shown in FIGS. 6A to 8B, but the present disclosure is not limited to these circuits. The inductors 3a includes inductors Lᵣ₁₁~Lr_{1N} and Lᵣ₂₁~L_{r2N}. The transformer T includes a plurality of magnetizing inductors Lₘ₁~L_{mN}. In an embodiment, the primary windings 21 are connected in series, the secondary windings 22 are connected in parallel, the inductors L_{m1~}L_{mN} are the magnetizing inductors of the transformer T, the inductors L_{r11~}L_{r1N} are respectively connected with the primary windings 21 in series and the inductors L_{r21~}L_{r2N} are respectively connected with the secondary windings 22 in series, as shown in FIG. 6A. In an embodiment, the primary windings 21 are connected in series, the secondary windings 22 are connected in series, the inductors Lₘ₁~L_{mN} are the magnetizing inductors of the transformer T, the inductors Li₁₁~L_{r1N} are respectively connected with the primary windings 21 in series, and the inductors L_{r21~}L_{r2N} are respectively connected with the secondary windings 22 in series, as shown in FIG. 6B.

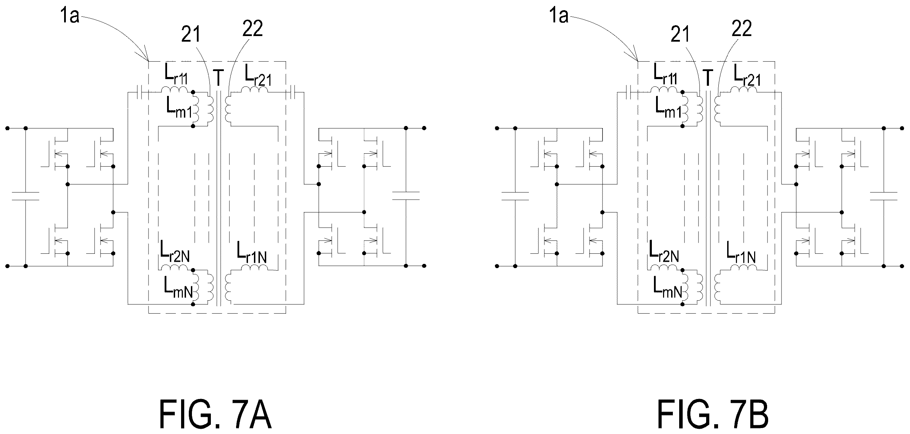

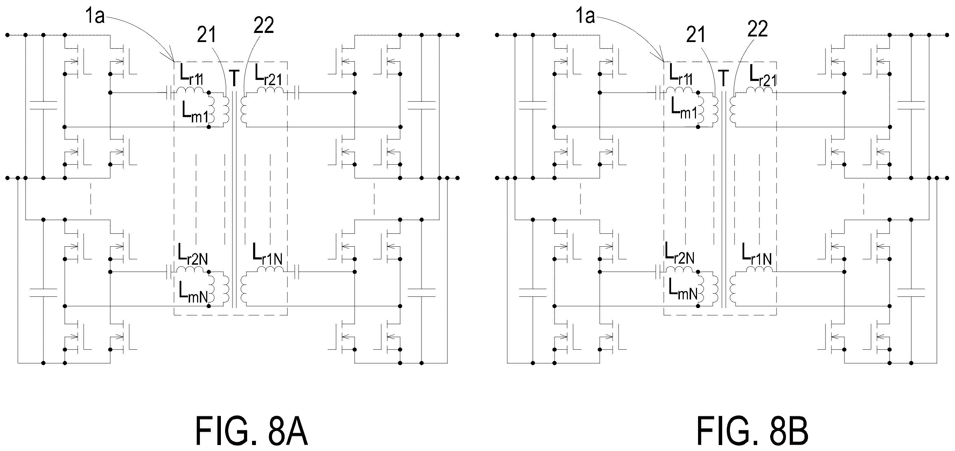

In an embodiment, the primary windings 21 are connected in series, the secondary windings 22 are connected in series, the inductors L_{m1~}L_{mN} are the magnetizing inductors of the transformer T, the inductors Lᵣ₁₁~L_{r1N} are respectively connected with the primary windings 21 in series, and the inductors L_{r21~}L_{r2N} are respectively connected with the secondary windings 22 in series, as shown in FIG. 7A. In an embodiment, the primary windings 21 are connected in series, the secondary windings 22 are connected in series, the inductors Lₘ₁~L_{mN} are respectively connected with the primary windings 21 in parallel, the inductors L_{r11~}L_{r1N} are respectively connected with the primary windings 21 in series, and the inductors L_{r21~}L_{r2N} are respectively connected with the secondary windings 22 in series, as shown in FIG. 7B. In an embodiment, the primary windings 21 are connected in parallel, the secondary windings 22 are connected in parallel, the inductors Lₘ₁~L_{mN} are respectively connected with the primary windings 21 in parallel, the inductors Lᵣ₁₁~L_{r1N} are respectively connected with the primary windings 21 in series, and the inductors L_{r21~}L_{r2N} are respectively connected with the secondary windings 22 in series, as shown in FIG. 8A. In an embodiment, the primary windings 21 are connected in parallel, the secondary windings 22 are connected in parallel, the inductors L_{m1~}L_{mN} are the magnetizing inductors of the transformer T, the inductors L_{r11~}L_{r1N} are respectively connected with the primary windings 21 in series, and the inductors L_{r21~}L_{r2N} are respectively connected with the secondary windings 22 in series, as shown in FIG. 8B. The primary windings 21 and the secondary windings 22 are in good interleaving, so that the integrated magnetic component has a low Fr (R_{ac}/R_{dc}).

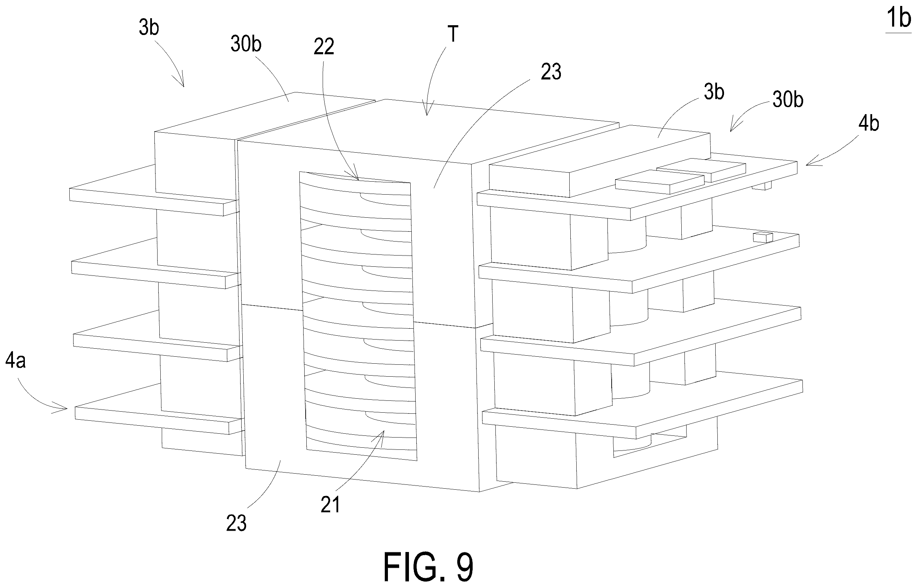

FIG. 9 is a schematic perspective view illustrating the integrated magnetic component according to a third embodiment of the present disclosure. In the embodiment, the structures, elements and functions of the integrated magnetic component 1b are similar to those of the integrated magnetic component 1 of FIG. 1, and are not redundantly described herein. In the embodiment, the integrated magnetic component 1b includes a transformer T, a plurality of inductors 3b and a plurality of PCBs 4a, 4b. The primary windings 21 and the secondary windings 22 of the transformer T are disposed on the different PCBs 4a, 4b. Preferably but not exclusively, the primary windings 21 are disposed on the PCBs 4a, and the secondary windings 22 are disposed on the PCBs 4b. The inductors 3b are disposed on both sides of the transformer T. In an embodiment, the inductors 3b include two inductor cores 30b. Preferably but not exclusively, in some embodiments, the PCB windings are PCB Litz wire. The windings of the inductors 3b can be disposed on a rigid PCB, a flexible PCB, or coppers with insulation. The inductors 3b are disposed on both sides of the transformer T. In other embodiments, the inductors 3b are disposed on the primary side or the secondary side of the transformer T.

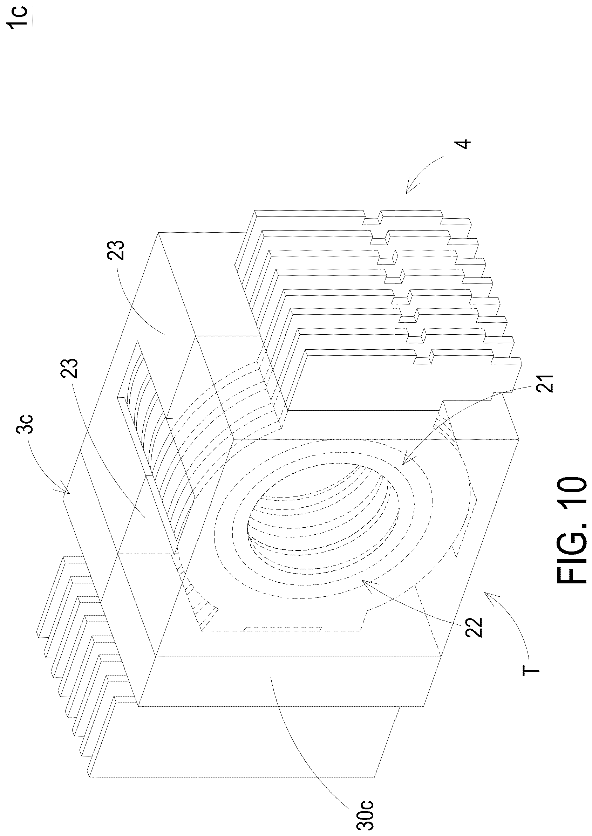

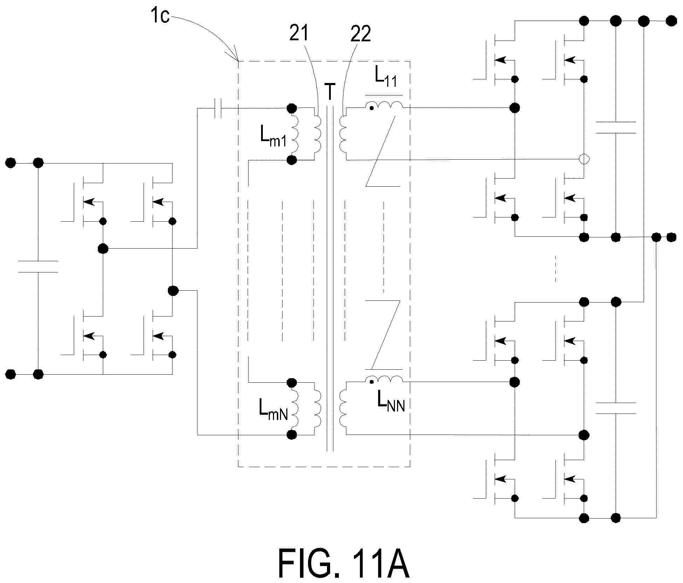

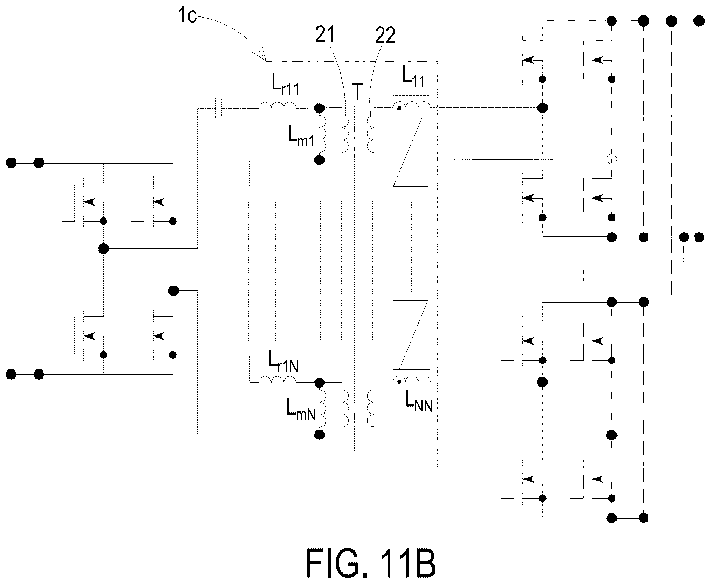

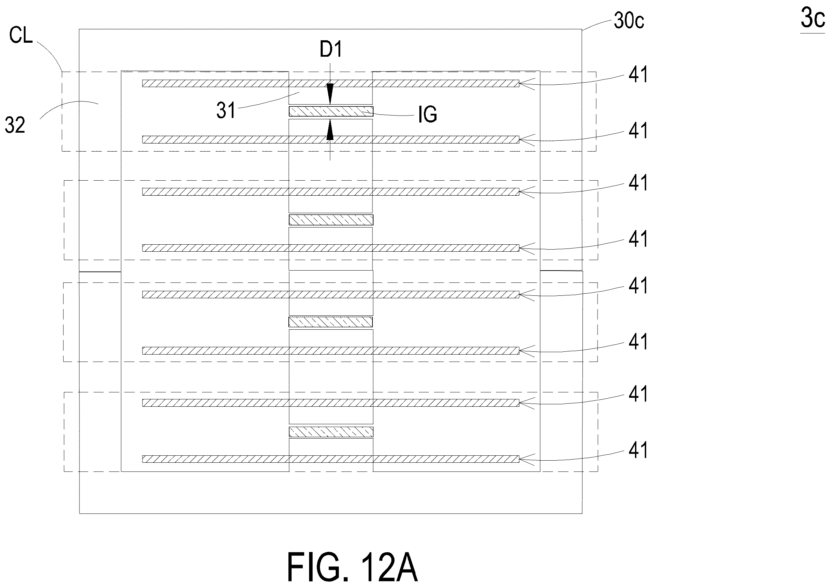

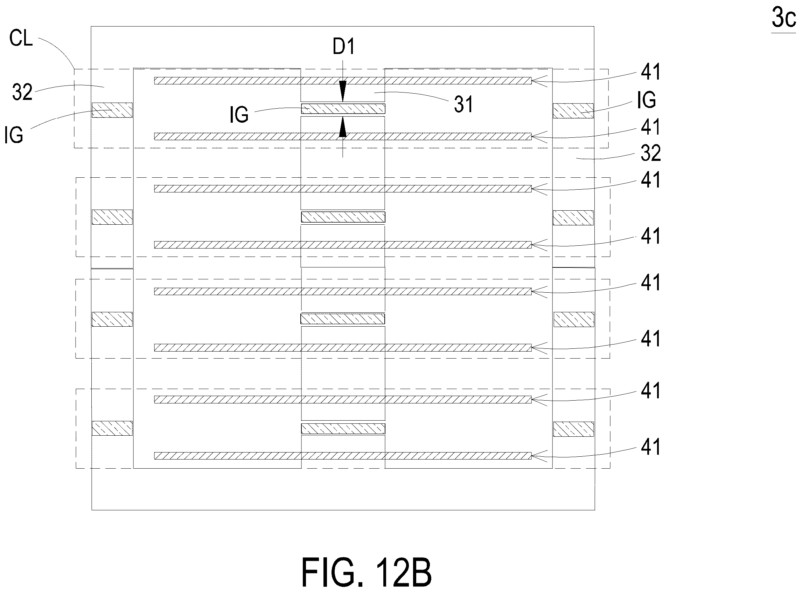

FIG. 10 is a schematic perspective view illustrating the integrated magnetic component according to a fourth embodiment of the present disclosure. FIG. 11A and FIG. 11B show two exemplary circuits with primary windings in series and secondary windings in parallel that can use the proposed integrated magnetic component of FIG. 10. FIG. 12A and FIG. 12B show exemplary structures of positive coupled inductors according to the fourth embodiment of the present disclosure. In the embodiment, the structures, elements and functions of the integrated magnetic component 1c are similar to those of the integrated magnetic component 1 of FIG. 1, and are not redundantly described herein. In the embodiment, the integrated magnetic component 1c is applicable to an isolated DC-DC converter, such as a CLL resonant converter with positive coupled inductors (as shown in FIG. 11A) or a LLCL resonant converter with positive coupled inductors (as shown in FIG. 11B). In the embodiment, the integrated magnetic component 1c includes a transformer T, a plurality of inductors 3c and a plurality of PCBs 4. The inductors 3c include inductors Lᵣ₁₁~L_{r1N} connected to the primary windings 21 in series or parallel, and further include a plurality of positive coupled inductors L₁₁~L_{NN} respectively connected to the secondary windings 22. The inductors L_{11~}L_{NN} are positively coupled with each other. The transformer T includes a plurality of magnetizing inductors Lₘ₁~L_{mN}. Preferably but not exclusively, the inductors 3c include 2N PCB windings 41, N=4, and a cell CL is defined between each adjacent two of PCB windings 41, so that N cells CL are formed by the inductors 3c. In other embodiments, the N is an integer equal to or greater than 2.

In some embodiments, positive coupling refers to the orientation of windings such that an increase in current in one winding induces a voltage of the same polarity at a dot end of the other winding.

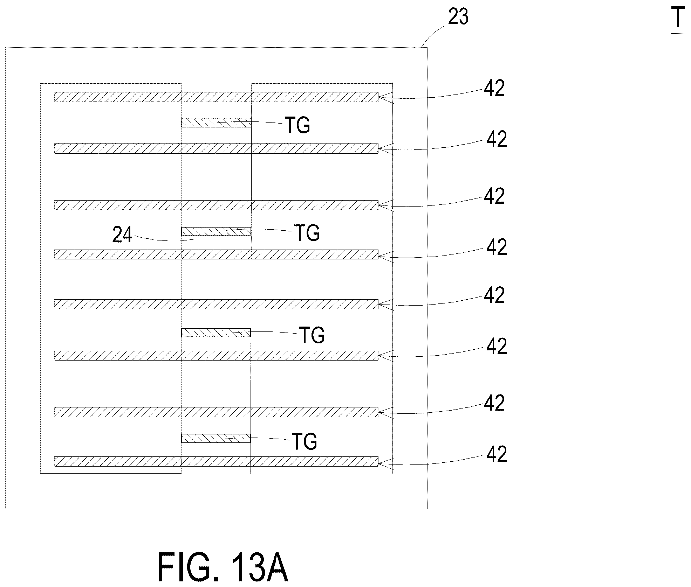

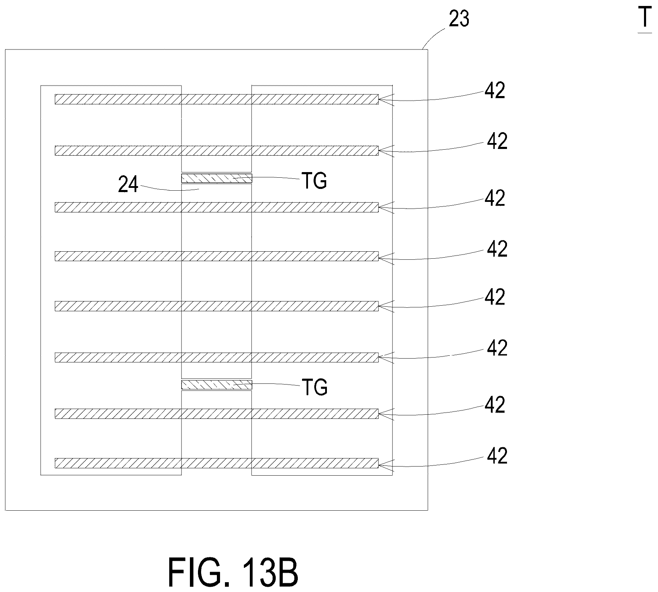

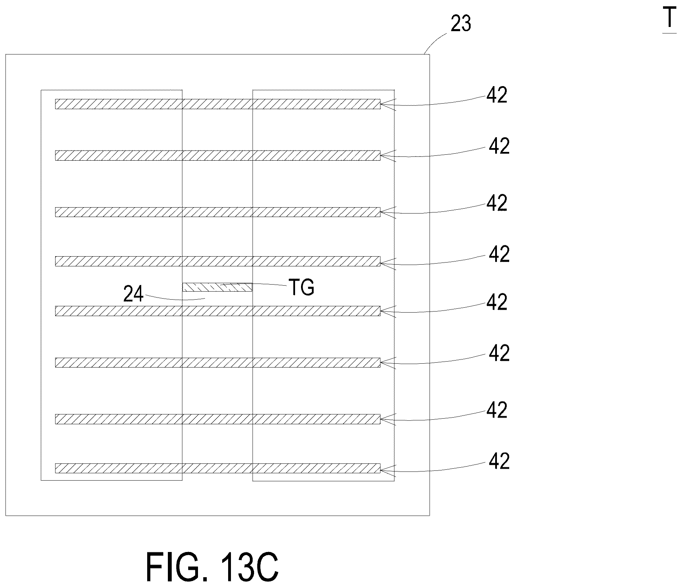

In the embodiment, the inductors 3c include at least two inductor cores 30c with one center leg 31 and two side legs 32. The 2N PCB windings 41 are wound on the center leg 31. Preferably but not exclusively, in an embodiment, each of the N cells CL includes an inductor airgap IG formed on the center leg 31, as shown in FIG. 12A. Preferably but not exclusively, in an embodiment, each of the N cells CL includes at least one inductor airgap IG formed on the center leg 31 or/and the side legs 32, as shown in FIG. 12B. In some embodiments, N PCB windings 42 are wound on the center legs 24 of the transformer cores 23 and served as the primary windings 21 and the secondary windings 22. N=8, or an integer equal to or greater than 2. In some embodiments, the transformer cores 23 includes at least one transformer airgap TG, as shown in FIG.13A to FIG. 13C.

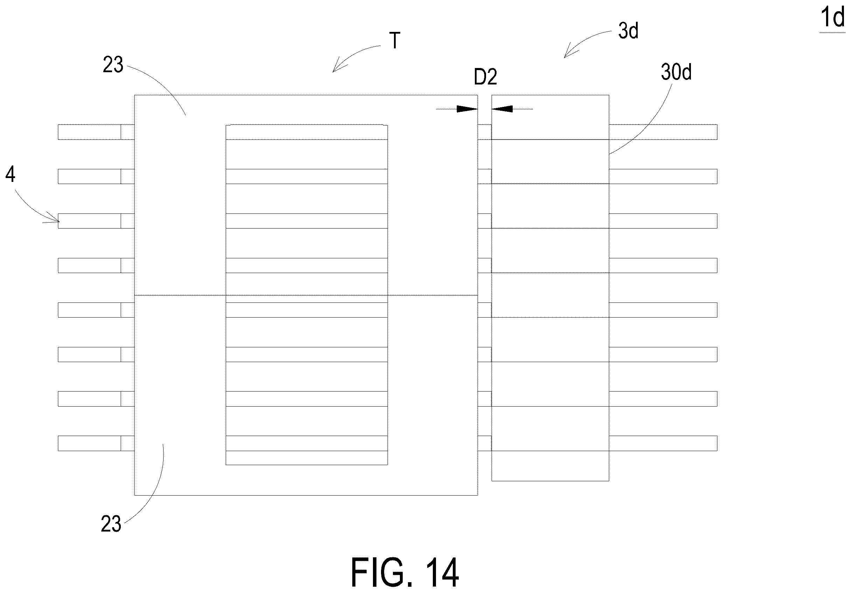

FIG. 14 is a lateral view illustrating the integrated magnetic component according to a variation example of the first embodiment of FIG. 1. In the embodiment, the structures, elements and functions of the integrated magnetic component 1d are similar to those of the integrated magnetic component 1c of FIG. 10. Refer to FIG. 12A to FIG. 13C and FIG. 14. In the embodiment, the inductors 3d of the integrated magnetic component 1d include at least one inductor airgap IG on all the legs 31, 32 of inductor 3d (Referring to FIG. 12A and FIG. 12B), or/and the transformer T of the integrated magnetic component 1d includes at least one transformer airgap TG on all the center legs 24 of the transformer T. Notably, the inductor airgap IG has a gap distance D1, and a spaced distance D2 is maintained between the transformer T and the inductors 3d. Preferably but not exclusively, the spaced distance D2 is at least greater than 3 times the gap distance D1, so as to form the positive coupled inductors 3d. In another embodiment, there is no airgap on the side legs, and the spaced distance D2 is zero. The present disclosure is not limited thereto.

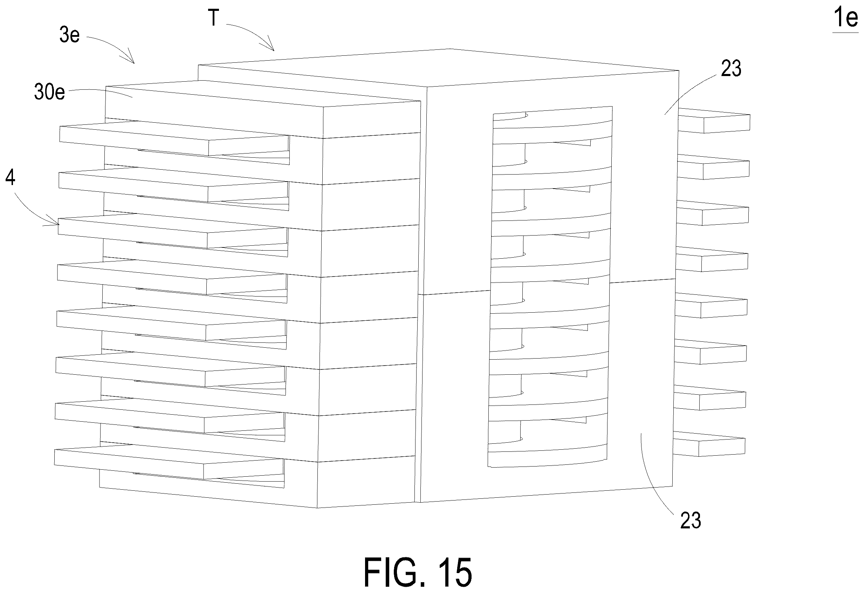

FIG. 15 is a schematic perspective view illustrating the integrated magnetic component according to another variation example of the first embodiment of FIG. 1. In the embodiment, the structures, elements and functions of the integrated magnetic component 1e are similar to those of the integrated magnetic component 1c of FIG. 10. In the embodiment, no airgap is formed on the side legs of inductor 3e and transformer T, and the distance between inductor 3e and transformer T is substantially zero. Namely, the two pieces of transformer cores 23 without airgap on the side legs thereof and the inductor core 30e without airgap on the side legs thereof are integrated with each other. Certainly, the present disclosure is not limited thereto.

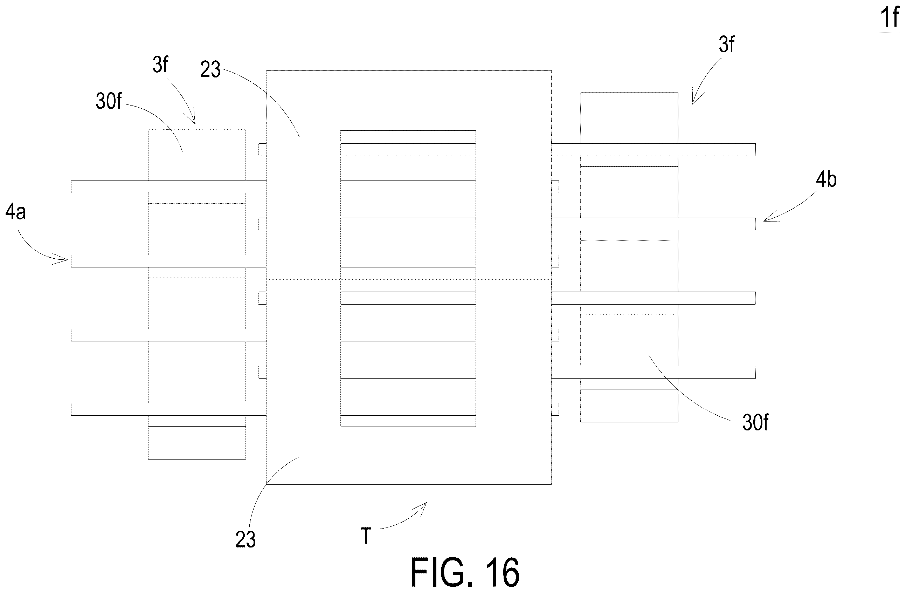

FIG. 16 is a lateral view illustrating the integrated magnetic component according to a variation example of the third embodiment of FIG. 9. In the embodiment, the structures, elements and functions of the integrated magnetic component 1f are similar to those of the integrated magnetic component 1d of FIG. 14. In the embodiment, there is airgap on all the legs of inductors 3f or on all the transformer legs or on all the legs of both transformer T and the inductors 3f, and the distance between the inductors 3f and transformer T is at least the length of 3 times of inductor airgap. In other embodiments, there is no airgap on all side legs of inductors 3f and transformer T, the distance between the inductors 3f and transformer T is substantially zero, and the two pieces of transformer cores 23 without airgap and the inductor core 30e without airgap are integrated with each other. Certainly, the present disclosure is not limited thereto and not redundantly described hereafter.

In summary, the present disclosure provides an integrated magnetic component for an isolated DC-DC converter. The integrated magnetic component is a PCB-winding-based integrated magnetic component with two pieces of transformer cores and multiple pieces of inductor cores. The inductor cores can be any shape including matrix core types. The PCB windings on the primary and the secondary sides can be connected in series or in parallel to handle high voltage/current application. Each PCB can be changed to multiple PCBs connected in parallel or in series. Comparing to Litz wire, the multiple-layers PCB windings are low cost and helpful to form the high efficiency integrated magnetic component. Since the transformer winding is formed by many paralleled PCBs, it facilitates the integrated magnetic component to have a low DC resistance. Furthermore, the primary winding and the secondary winding are in good interleaving, so that the integrated magnetic component has a low Fr (R_{ac}/R_{dc}). The two pieces of transformer cores are selected from PQ core, EE core, EQ core or EI core. The inductor winding has small number of turns (≤4), and it helps to achieve the low Fr. The plural pieces of inductor cores form a single-phase vertical matrix inductor core structure with lower core loss and volume saving, so that the current sharing is controlled by the tolerance of vertical matrix inductors.

## Claims

1. An integrated magnetic component (1, 1a, 1c, 1d, 1e) for an isolated DC-DC converter, **characterized by** comprising:
a plurality of PCBs (4);
a transformer (T) comprising a plurality of primary windings (21), a plurality of secondary windings (22), and two pieces of transformer cores (23), wherein the primary windings (21) and the secondary windings (22) are disposed on the PCBs (4) and wound around the two pieces of transformer cores (23); and
a plurality of inductors (3, 3a, 3c, 3d, 3e) disposed on the PCBs (4) and connected to the transformer (T);
wherein the primary windings (21) and the secondary windings (22) of the transformer (T) are disposed correspondingly in pairs on one of the PCBs (4), and the inductors (3, 3a, 3c, 3d, 3e) are disposed adjacent to the transformer (T).

2. The integrated magnetic component (1, 1a, 1c, 1d, 1e) according to claim 1, wherein the inductors (3, 3c, 3d, 3e) are disposed on one side of the transformer (T), wherein the inductors (3, 3c, 3d, 3e) comprise one piece of inductor core cover (300), (N-1) pieces of first inductor core base (301) and one piece of second inductor core base (302), wherein N is an integer greater than or equal to 2, wherein the isolated DC-DC converter is a Series Resonant Converter (SRC), an LLC resonant converter, a CLL resonant converter or a Dual Active Bridge (DAB) converter.

3. The integrated magnetic component (1, 1a, 1c, 1d, 1e) according to claim 1, wherein the inductors (3a) are disposed on both sides of the transformer (T), wherein the inductors (3a) comprise one piece of first inductor core cover (303), one piece of second inductor core cover (306), (N-1) pieces of first inductor core base (301), one piece of second inductor core base (302), (N-1) pieces of third inductor core base (307), and one piece of fourth inductor core base (308), wherein N is an integer equal to or greater than 2, wherein the isolated DC-DC converter is a CLLC resonant converter or a CLLLC resonant converter or a Dual Active Bridge (DAB) converter.

4. The integrated magnetic component (1, 1a, 1c, 1d, 1e) according to any one of preceding claims 1 to 3, wherein the inductors (3, 3a, 3c, 3d, 3e) are connected to the primary windings (21) and the secondary windings (22) of the transformer (T) in series or parallel.

5. The integrated magnetic component (1, 1a, 1c, 1d, 1e) according to any one of preceding claims 1 to 4, wherein the inductors (3, 3a, 3c, 3d, 3e) comprise 2N inductors (3, 3a, 3c, 3d, 3e) and a cell (CL) with an inductor airgap (IG) between each adjacent two of 2N inductors (3, 3a, 3c, 3d, 3e), wherein N is an integer equal to or greater than 2, wherein the inductor airgap (IG) has a gap distance (D1), and a spaced distance (D2) is between the transformer (T) and the inductors (3, 3a, 3c, 3d, 3e).

6. The integrated magnetic component (1, 1a, 1c, 1d, 1e) according to any one of preceding claims 1 to 5, wherein the inductors (3, 3a, 3c, 3d, 3e) are positively coupled with each other.

7. An integrated magnetic component (1b, 1f) for an isolated DC-DC converter, **characterized by** comprising:
a plurality of PCBs (4a, 4b);
a transformer (T) comprising a plurality of primary windings (21), a plurality of secondary windings (22), and two pieces of transformer cores (23), wherein the primary windings (21) and the secondary windings (22) are disposed on the PCBs (4a, 4b) and wound around the two pieces of transformer cores (23); and
a plurality of inductors (3b) disposed on the PCBs (4a, 4b) and comprising one inductor core (30b, 30f) or a plurality of inductor cores (30b, 30f);
wherein the primary windings (21) and the secondary windings (22) of the transformer (T) are disposed on different PCBs, (4a, 4b) and the inductors (3b, 3f) are disposed on both sides of the transformer (T).

8. The integrated magnetic component (1b, 1f) according to claim 7, wherein the inductors (3b, 3f) comprise 2N inductors (3b, 3f) and a cell (CL) with an inductor airgap (IG) between each adjacent two of 2N inductors (3b, 3f), wherein N is an integer greater than or equal to 2, wherein the inductor airgap (IG) has a gap distance (D1), and a spaced distance (D2) is between the transformer (T) and the inductors (3b, 3f).

9. The integrated magnetic component (1b, 1f) according to claim 7 or 8, wherein the inductors (3b, 3f) are positive coupled with each other on the primary windings (21) and the secondary windings (22), and the isolated DC-DC converter is a CLL resonant converter or a LLCL resonant converter.

10. The integrated magnetic component (1b, 1f) according to claim 7 or 8, wherein the two pieces of transformer cores (23) without airgap on the side legs thereof and the inductor core (30b, 30f) without airgap on the side legs (32) thereof are integrated with each other.

11. The integrated magnetic component (1b, 1f) according to any one of preceding claims 7, 8 and 10, wherein the inductors (3b, 3f) are positively coupled with each other.

12. An integrated magnetic component (1, 1a, 1b, 1c, 1d, 1e, 1f) for an isolated DC-DC converter, **characterized by** comprising:
a plurality of PCBs (4, 4a, 4b);
a transformer (T) comprising a plurality of primary windings (21), a plurality of secondary windings (22), and a transformer core (23), wherein the primary windings (21) and the secondary windings (22) are disposed on the PCBs (4, 4a, 4b) and wound around the transformer core (23); and
a plurality of inductors (3, 3a, 3b, 3c, 3d, 3e, 3f) disposed on the PCBs (4, 4a, 4b) and comprising an inductor core (30, 30a, 30b, 30c, 30e);
wherein the inductors (3, 3a, 3b, 3c, 3d, 3e, 3f) are positively coupled with each other.

13. The integrated magnetic component (1, 1a, 1b, 1c, 1d, 1e, 1f) according to claim 12, wherein the primary windings (21) and the secondary windings (22) of the transformer (T) are disposed correspondingly in pairs on one of the PCBs (4), and the inductors (3, 3a, 3c, 3d, 3e) are disposed on both sides of the transformer (T), or wherein the primary windings (21) and the secondary windings (22) of the transformer (T) are disposed on the different PCBs (4a, 4b), and the inductors (3b, 3f) are disposed on one side or both sides of the transformer (T).

14. The integrated magnetic component (1, 1a, 1b, 1c, 1d, 1e, 1f) according to claim 12 or 13, wherein the inductors (3, 3a, 3b, 3c, 3d, 3e, 3f) comprise 2N inductors (3, 3a, 3b, 3c, 3d, 3e, 3f) and a cell (CL) with an inductor airgap (IG) between each adjacent two of 2N inductors (3, 3a, 3b, 3c, 3d, 3e, 3f), wherein N is an integer greater than or equal to 2, wherein the inductor airgap (IG) has a gap distance (D1), and a spaced distance (D2) is between the transformer (T) and the inductors (3, 3a, 3b, 3c, 3d, 3e, 3f).

15. The integrated magnetic component (1, 1a, 1b, 1c, 1d, 1e, 1f) according to any one of preceding claims 12 to 14, wherein the isolated DC-DC converter is a CLL resonant converter or a LLCL resonant converter, wherein the primary windings (21) are connected in series or parallel, the secondary windings (22) are connected in series or parallel, and the inductors (3, 3a, 3b, 3c, 3d, 3e, 3f) are respectively connected to the primary windings (21) and the secondary windings (22).
